# EUROPEAN PATENT APPLICATION

(11) **EP 4 650 902 A1**
(43) Date of publication of application: **19.11.2025**
(21) Application number: 24176287.1
(22) Date of filing: 16.05.2024
(51) Int. Cl.: G05D 1/60

(54) **MINING AUTOMATION SYSTEM OPERATION ZONE CONTROL**

(71) Applicant: Sandvik Mining and Construction Oy, 33330 Tampere (FI)
(72) Inventor: KOPPANEN, Jouni, 33311 Tampere (FI); SILVENTOINEN, Marko, 33311 Tampere (FI); LEHTONEN, Aleksi, 33311 Tampere (FI); HÄRKÖNEN, Teemu, 33311 Tampere (FI)
(74) Representative: Sandvik

(57) **Abstract**

According to an example aspect, there is provided a method for controlling operation zones of an underground mining automation system. The method comprises: receiving identification information of an identifier unit of a mobile object, wherein the mobile object is in or approaching an operation zone of the mining automation system, defining, on the basis of the identification information, a role of the identifier unit, and controlling change of an operation mode of the operation zone on the basis of the defined role.

## Description

### FIELD

The present invention relates to controlling operation zones of a mining automation system.

### BACKGROUND

In a mining automation system, there may be one or more autonomously operating mining work machines. Mining worksites, such as hard rock or soft rock mines or construction worksites, may comprise a variety of operation zones intended to be accessed by different types of mobile work machines, herein referred to as mining vehicles. A mining vehicle may be an unmanned, for example, remotely controlled from a control room, or a manned mining vehicle, such as a vehicle operated by an operator sitting in a cabin of the mining vehicle. Mining vehicles of a mining automation system may be autonomously operating, for example, automated mining vehicles, which in their normal operating mode operate independently without external control but which may be taken under external control at certain operation areas or conditions, such as during states of emergencies.

An isolated operation zone is typically reserved for the operation of the automated mining vehicles, into which zone an access by outsiders and outside vehicles is prevented in order to eliminate any risk of collision. There may be many operations zones within a worksite, for example between 10 to 30 zones for a fleet of vehicles in challenging underground conditions, so it is important to have a proper system supporting management of the zones. The operation zone being provided with such limited access may be separated from other zones of the worksite or automation system by gates or other kind of passage control devices.

### SUMMARY

The invention is defined by the features of the independent claims. Some specific embodiments are defined in the dependent claims.

According to a first aspect, there is provided an apparatus, being configured to or comprising means configured to: receive identification information of an identifier unit of a mobile object, wherein the mobile object is in or approaching an operation zone of an underground mining automation system, define, on the basis of the identification information, a role of the identifier unit, and control change of an operation mode of the operation zone on the basis of the defined role.

The means may comprise one or more processors and memory comprising instructions, when executed by the one or more processors, cause the apparatus to perform the method of the second aspect.

According to a second aspect, there is provided a method for controlling operation zones of an underground mining automation system, the method comprising: receiving identification information of an identifier unit of a mobile object, wherein the mobile object is in or approaching an operation zone of the underground mining automation system, defining, on the basis of the identification information, a role of the identifier unit, and controlling change of an operation mode of the operation zone on the basis of the defined role.

According to a third aspect, there is provided an apparatus comprising at least one processor, at least one memory including computer program code, the at least one memory and the computer program code being configured to, with the at least one processor core, cause the apparatus at least to perform the method or an embodiment of the method.

According to a fourth aspect, there is provided a computer program, a computer program product or (a non-tangible) computer-readable medium comprising computer program code for, when executed in a data processing apparatus, to cause the apparatus to perform the method or an embodiment thereof.

According to a fifth aspect, there is provided a mining automation system, comprising the apparatus of the first aspect or an embodiment thereof. The system may further comprise at least one passage control unit to separate the operation zone from other operation zones, the identifier unit, and a positioning system. The system and the apparatus thereof may be configured to receive at least the identification information of the identifier unit from the positioning system. The system and the apparatus thereof may be further configured to receive position information dependent on position of the identifier unit from the positioning system and define the role of the identifier unit further on the basis of the received position information and/or control the change of the operation mode of the operation zone further on the basis of the received position information.

### BRIEF DESCRIPTION OF THE DRAWINGS

FIGURE 1 illustrates an example of an underground work site provided with a system for zone passage control;
FIGURE 2 illustrates a zone passage control system;
FIGURE 3 illustrates a method according to at least some embodiments;
FIGURE 4 illustrates role assignment; and
FIGURE 5 illustrates an apparatus capable of supporting at least some embodiments.

### EMBODIMENTS

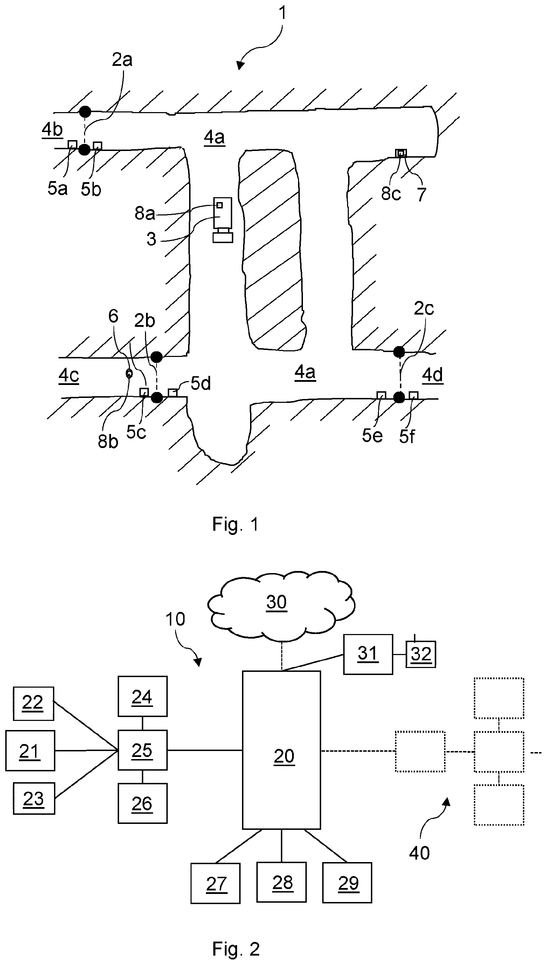

Figure 1 illustrates a simplified example of a portion of a mining worksite 1, in the present example comprising underground tunnels. The mining worksite may comprise an ore mine or a construction site, such as a railway or road tunnel site. However, it will be appreciated that a worksite may comprise only on-surface areas, only underground areas, or both surface and underground areas. The term mining vehicle herein refers generally to mobile work machines suitable to be used in the operation of different kinds of underground or surface mining or construction excavation worksites, such as lorries, dumpers, dozers, vans, mobile rock drilling or milling rigs, mobile reinforcement machines, and bucket loaders or other kind of mobile work machines which may be used in different kinds of excavation worksites. The term mobile object may include all mobile objects which may have an access into an operation zone of a worksite, such as mining vehicles and human beings in the worksite. An autonomously operating mining vehicle may, in an autonomous operating mode, operate independently without requiring continuous user control but which may be taken under external control in exceptional circumstances, for example.

Figure 1 illustrates a passage control system with operation zones 4a, 4b, 4c, and 4d of a mining automation system. The system comprises passage control units (PCU) 2a, 2b, 2c separating operation zones 4a, 4b, 4c, and 4d. The operation zones may also be referred to as safety zones, for example. For example, PCU 2a is associated with zones 4a and 4b, wherein in the zone 4a there may be an autonomously operating mining vehicle 3. Below a reference sign 4 may be used as a general reference sign for operation zone(s) 4a, 4b, 4c, 4d unless a particular operation zone is referred to. Similarly, PCU may be used as a general reference sign for passage control unit(s) 2a, 2b, 2c, unless a particular PCU is referred to.

At least some of the operation zones may be isolated by their respective separating PCUs, enabling autonomous operation of one or more mining vehicles within the isolated zone. For example, the mining vehicle 3 may be configured to autonomously travel a route in the zone 4a, which may comprise a dump point at the end of the tunnel. In the present simplified example, zone 4a is illustrated entirely, and may be isolated from the other zones.

Each PCU 2 may be associated with one or more safety controlling units 5a, 5b, 5c, 5d, 5e, 5f (which may also be referred by general reference 5), for controlling at least some safety related features. Association of an entity with another or counterpart entity may refer to the entities being in physical proximity, and at least one of the entities are assigned to the other. These units 5 may be used at least for acknowledging (ack) the associated PCU, when using the PCU to isolate an operation zone. Acknowledging may refer to generally providing a safety related or clearance confirmation based on an input by a human operator, for clearing the related PCU and/or operation zone. An acknowledgement may comprise a safety related confirmation that an operation zone can be isolated by the associated PCU. For example, an acknowledgement may comprise a confirmation that there are no people within the operation zone and the operation zone can be isolated. These units 5 may be referred to as acknowledgement/ack units, as in the examples below. As in the present example, at least some of the PCUs may be associated with two (or even more) ack units, arranged at both sides of the PCU. Thus, a related operation zone may be acknowledged from both sides of the PCUs. For example, PCU 2a may be acknowledged by ack unit 5a or 5b, 2b may be acknowledged by 5c or 5d, and 2c may be acknowledged by 5e or 5f.

Mobile objects 3, 6, and also fixed objects 7, at the working site may be provided with identifier units 8a, 8b, 8c, such as wireless tags. The identifier units may be detected by a reader device of the mining automation system, such as a wireless tag reader device. In some embodiments, the identifier unit comprises a transmitter, and the identifier unit may be detected and identified based on a signal emitted by the transmitter. Below a reference sign 8 may be used as a general reference sign for an identifier unit.

It is to be appreciated that besides the entities illustrated in simplified Figure 1, there may be further units, sub-systems or elements, such as a passage station as described in EP 1616077.

Figure 2 illustrates a system 10 for mining automation system operation zone and passage control. The system may comprise or be included in a mining automation system control of a worksite, such as the worksite illustrated in Figure 1. The system comprises a number of functional units 21 to 29 and at least one (system) controller 20 configured to be operationally connected to at least some of the functional units 21 to 29.

The zone control system 10 may comprise detection units 21 which may be considered as functional units in the system 10 and configured to detect a mobile object, such as a mobile mining vehicle or a person, entering into the operation zone 4 and/or exiting the operation zone 4. The detection unit 21 may be comprised by the PCU 2.

When the detection unit 21 detects a mobile object, the detection unit may provide a corresponding signal to the controller 20. The detection unit 21 may be an optoelectronic guard detector, such as a guard detector based on the use of a light curtain or photocells. Alternatively other types of devices, such as laser scanning devices and safety mats, for instance, or any other applicable device to detect a mobile object, may be applied. The detection unit 21 may be configured to detect direction of motion of the mobile object and may also provide such direction information to the controller 20.

Ack units 22 and 23, such as ack units 5a and 5b, may be arranged on both sides of the detection unit 21. The ack units 22 and 23 may be comprised by the PCU or provided in another unit which may be positioned in proximity of the detection unit 21, such as a control box or unit or a field cabinet.

The system may further comprise identification units 24. The identification unit 24 may be comprised by the PCU and may be configured to identify the mobile object entering or exiting the operation zone. The identification of the mobile objects may include the identification of the type of the mobile object, for example if the mobile object is one of an automated mining vehicle, an unmanned remotely controllable mining vehicle, a manned mining vehicle, or a human being. The identification of the mobile object may also include the identification of a particular vehicle or person. When the identification unit 24 has identified the mobile object, the identification unit 24 generates a signal comprising associated mobile object identification information to the controller 20.

The system 10 may comprise indication units 26. The indication unit 26 may be comprised by the PCU and may be configured to indicate a state of the associated operation zone, such as an admissibility state and/or further control information for a mobile object to enter into an associated operation zone 4 and/or exit away from the operation zone 4. For example, traffic light type of visual indication may be applied. The indication unit may also comprise an audio output unit producing an audible signal specific to the admissibility state.

The system 10 for the zone passage control may comprise transceiver units 25. The transceiver unit may be configured to provide a communication link between the functional units disclosed above and the controller 20. The transceiver unit may be configured to provide connectivity also for other elements of the mining automation system. Depending on the intended operation of the functional unit the communication link may be established as unidirectional or bidirectional communication link.

In the example of Figure 2 there is a transceiver unit 25 for each PCU and a set comprising one or more of a detection unit 21, an identification unit 24, and an indication unit 26. However, if applicable, a transceiver unit 25 may also be provided to serve communication between the controller 20 and several detection units 21, several identification units 24 and several indication units 26. In another example, unit 25 may be a (local) control unit configured to control at least some of the units 21-24, and 26, and also comprise a transceiver to communicate with the controller 20.

Wireless and/or wired transmission technique may be applied. For example, Ethernet based communication or wireless cellular data transmission, such as 4G, 5G, or 6G radio access technology, or wireless local area networking, such as IEEE 802.11 based communications may be applied. Functional unit(s), such as detection units 21, identification units 24 and/or indication units 26 may comprise an internal transceiver unit. It is to be noted that there may be further communication network elements, such as wireless local area network (WLAN) elements.

For simplicity, only one set of functional units 21 to 26 for the controller 20 is illustrated, but it will be appreciated that the system will comprise a plurality of further sets 40 of similar units. Depending on the embodiment the system 10 for the zone passage control may comprise only some types of the functional units disclosed above, such as one or more of the detection units 21, the ack units 22, 23, and indication units 26.

The system 10 may further comprise or be connected to an operator unit 27, such as a wireless operator unit. The operator unit may comprise a user interface (UI), via which, directly or indirectly, information may be provided from the controller 20 for an operator, and operator inputs may be provided to the controller 20 to control or configure the controller and the system 10.

The system 10 may comprise or be operatively connected to a mining vehicle controller 28 for controlling at least some operations of the mining vehicle. The mining vehicle controller 28 may be provided in each autonomously operating mining vehicle 3 and may be configured to control at least some autonomous operations of the mining vehicle. The controller 20 may be configured to cause or provide a control command to the mining vehicle controller 28 to stop vehicle 3 located within the operation zone in response to detecting an unauthorized mobile object to enter the operation zone comprising the autonomously operating mining vehicle 3.

The system 10 may further comprise or be connected to a further device or system 29, such as a handheld user unit, a vehicle unit, a worksite management device/system, data analytics device/system, sensor system/device, etc. The system 10 may be connected to further network(s) and/or data processing system(s) outside the worksite, such as a remote control and/or monitoring device/system, a cloud service, a data analytics system, an intermediate communications network, such as the internet, etc.

The system 10 and the controller 20 may be connected to a further system or network 30, such as further elements of the mining automation system, a worksite management system, a cloud service, an intermediate communications network, such as the internet, etc.

For example, the system 10 and the controller 20 may be connected to a location information or positioning system 31, such as a real-time location system (RTLS). The positioning system may be configured to maintain position information of mobile objects 3, 6 at the work site. The positioning system 31 may comprise a controller and be connected to a set of access nodes 32 at the worksite. The access nodes may be base stations or other wireless nodes of a wireless access system comprising a non-cellular, such as a WLAN, and/or a cellular communications network, such as a 4G, 5G, 6G or some other generation cellular network. The controller 20 may also be connected to the wireless access system, e.g. by the transceiver unit(s) 25, and may be configured to communicate with further devices via the access nodes 32.

The controller 20 may comprise one or more processors executing computer program code stored in one or more memories. The controller may comprise or be connected to a user interface with a display device as well as operator input interface for receiving operator commands and information to the controller.

The controller 20 may be configured to control a plurality of operation zones 4, such as zones reserved and configured for the operation of the autonomously operating mining vehicles, by the detection units 21, the identification units 24 and the indication units 26. In an alternative embodiment, the controller 20 is configured to control only a single operation zone. The controller 20 may be configured to send and receive passage control related information to/from other controllers, or there may be a further master control unit configured to control the controllers 20.

Controlling an operation zone may comprise controlling a state of the operation zone. The state of the operation zone may refer to or define an operation mode of the operation zone, which may define the level of autonomous operations permitted within the zone. Terms state or mode (of the operation zone) may be used interchangeably.

The controller 20, or another control unit, may be configured to store and update operation mode parameter information for each zone 4, indicative of the state of an associated operation zone. The operation mode parameter(s) of a zone 4 may be configured to indicate operational condition or mode of activities allowed in the zone. In some embodiments, the operation mode parameter may indicate autonomous operation, whereby one or more autonomously operating vehicles are allowed to operate in the zone, with or without monitoring by an operator, and persons (or other mobile objects) are not allowed to enter the zone. Such operation mode may also be referred to as an automation or autonomous operation mode or state, for example. In some embodiments, the operation mode parameter may indicate manual operation, whereby autonomous operation is not allowed in the zone and persons and manually operated mining vehicles are allowed to enter the zone. However, it is to be appreciated that there may be other operation modes, such as an emergency operation mode or state.

The controller 20 may be configured to change the operation mode parameter in response to manual input by an authorized operator or safety responsible person and/or in response to an automatically performed operation mode (definition) procedure configured to check or detect one or more operation mode parameter change conditions. The controller 20 may be configured to update an operation mode parameter of at least one zone 4 in response to detecting a mobile object to pass a PCU 2 associated with the at least one zone. In some embodiments, positions of mobile objects 3 are continuously monitored and a change of a position of a mobile object from one zone to another zone may trigger an operation mode change procedure.

The controller 20 may be configured to determine the operation mode of the zone 4 on the basis of information supplied by at least some of the detection unit(s) 21, the ack units 22, 23, the identification unit(s) 24, the positioning system 31. The operation mode may be determined based on an operator input, directly via a user interface to the controller 20 or indirectly via another unit 27, such as a wireless operator unit. The system may further be configured to store information of at least one of a number and/or a type of mobile objects existing in the zone 4 and a number and/or a type of mobile objects entering or exiting the zone.

Further, the controller 20 may be configured to determine, on the basis of the determined operation mode of the zone, an admissibility level for a mobile object to enter the zone 4 and/or exit the zone. The admissibility level may generally refer to information to control access of the mobile object to enter and/or exit the zone. For example, in a simple form the admissibility level may comprise two options or states, such as a negative state indicating that the mobile object is not allowed to enter into the operation zone or exit away from the operation zone, and a positive state indicating that the mobile object is allowed to enter into the operation zone or exit away from the operation zone. The controller 20 may be configured to send a control signal to the mining vehicle controller 28 on the basis of the admissibility level, such as a control command to stop an autonomously operating vehicle.

However, it is to be appreciated that in an alternative embodiment, at least some of the presently disclosed functions of the controller 20 may, instead of a centralized approach, be arranged as decentralized, in a distributed system.

When changing the operation mode of the operation zone 4 to an autonomous operation, it is critical to ensure that it can be performed in a safe manner. For example, in some cases it may be necessary to ensure that only appropriate mobile objects exist in the operation zone. A user-performed clearance procedure may be required, where a user checks that the zone can be isolated, and acknowledges each PCU 2 of the zone by an associated ack unit 5. For example, the user checks that there are no inappropriate persons or devices remaining in the zone and autonomous operation of mining vehicle(s) may be permitted in the zone.

Improvements are now provided for a mining automation system for controlling operation zones in mining automation system and their operation mode transition, facilitating to improve operations efficiency and reduce safety risks.

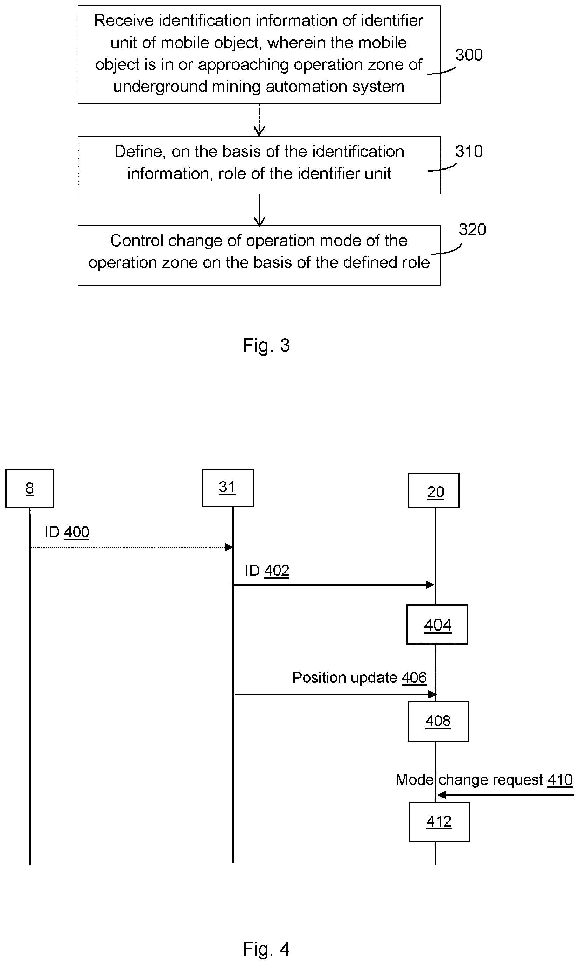

Figure 3 illustrates a method for controlling operation zones of a mining automation system. At least one apparatus, which may be a device of a mining automation control system, such as the controller 20 or another controller, may be configured to perform the method as a computer-implemented method. Although references are made below to entities of Figures 1 and 2, the method and its embodiments may also be applied in other types of mining automation systems. For example, the system may be without the PCU(s)/detection unit(s) 2, 21, associated ack units 5, 22, 23, identification units 24, and/or indication units 26.

The method comprises receiving 300 identification information of an identifier unit of a mobile object, wherein the mobile object is within or approaching an operation zone of an underground mining automation system. The identifier unit may comprise a transmitter, and the identifier unit may be detected and identified based on a signal emitted by the transmitter. The apparatus performing the method of Figure 3 may be configured to receive the identification information from the positioning system 31, such as an RTLS system, a reader device, or from an access point of a communications network, for example.

The automation system may be configured to perform autonomous mining vehicle operations in the operation zone. For example, the apparatus performing the method may be configured to perform block 300 during configuring or active use of the mining automation system and the operation zone. This block may be entered based on an input from an operator via a UI, such as a mining automation graphical user interface, GUI, a safety system GUI, passage control GUI, or a mining operations design or control GUI. Block 300 may be entered in response to detecting or configuring the mobile object and/or the associated identifier unit to the automation system or to the operation zone, for example. The identifier unit and the identification information thereof may be pre-configured as part of an autonomous operations preparation stage.

Block 310 comprises defining, on the basis of the identification information, a role of the identifier unit. Defining a role of the identifier unit may comprise, for example, assigning a role for an identifier unit or determining a role already assigned for the identifier unit. The apparatus may be configured to assign the role in block 310. The apparatus may be configured to check a predefined role already assigned for the identifier unit in block 310. Block 300 or 310 may comprise a processor of the apparatus receiving a role identifier or input information for defining a role identifier from a memory and/or from another device. For example, the apparatus may be configured to receive in block 300 the role identifier or at least some of the input information, such as an identifier of the identifier unit. The role identifier may refer generally to information indicative of a role of the identifier unit, which can be stored in a memory accessible by the apparatus.

Block 320 comprises controlling change of an operation mode of the operation zone on the basis of the defined role.

The term role may refer to a control parameter configured to control a change of an operation mode of an operation zone from a first operation mode to a second operation mode, such as a change from a manual operation state (or mode) of an operation zone to an autonomous operation state (or mode) of the operation zone. The apparatus may be configured to select the control parameter from a set of control parameters on the basis of the mobile object associated with the identifier unit. The apparatus may be configured to assign the control parameter for the identifier unit on the basis of a characteristic of the mobile object such as a status or type of the mobile object, for example.

The roles may be defined in many different ways, depending on the needs of the worksite and the automation and safety requirements. In a very simple example, the identifier unit may have a role of an autonomously operating vehicle allowed to be in the operation zone or a person, affecting whether the operation mode may be changed from or to an autonomous operation state. The role may be specific to an operation zone. Thus, the role may be changed in response to detecting the mobile object to move from one operation zone to another. Information affecting the control parameter may be limited to at least one operation zone, or be assigned on the basis of a state of the mobile object in respect to at least one operation zone. Some further example embodiments are illustrated below.

Block 320 may comprise preventing or approving a change of the operation mode of the operation zone. The apparatus may be configured to check permission(s) authorized for the role in block 320, or as a further block between blocks 310 and 320. The change of the operation mode may be dependent on the permission(s) of the role and the current or intended operation mode. Block 320 may comprise preventing or approving the change of the operation mode if the defined role of the identifier unit allows or prevents the change. Block 320 may comprise preventing a change of the operation mode of the operation zone to an autonomous operation state in which at least one mining vehicle is operating in the operation zone autonomously. For example, if the role of the identifier unit is not authorized in intended autonomous operation state, change of the operation mode to the intended autonomous operation state is prevented.

The change of the operation mode may be dependent on a position of the identifier unit with respect to the operation zone such as if the identifier unit is inside or outside the operation zone. Thus, the block 320 may comprise, or there may be further block(s) of checking the position of the identifier unit and controlling the change further on the basis of the position of the identifier unit. The position of the identifier unit in respect to the operation zone may be an input to block 320 and the operation mode change may be permitted or rejected on the basis of the position information. For example, if the role of the identifier unit is not authorized in an intended autonomous operation state, change of the operation mode to the intended autonomous operation state may be allowed if the identifier unit is outside the operation zone.

The apparatus may be configured to reject or approve an operation mode change request on the basis of the defined role as an input. It will be appreciated that an operation mode change procedure may comprise one or more other inputs and checks on the basis of which the final decision on the mode change is made. For example, the apparatus may be configured to check the current position(s) of other identifier unit(s) in respect to the operation zone and/or role(s) of other identifier unit(s) before changing to the autonomous operation state. The apparatus may be configured to control checks, to determine if the change of the operation mode of the operation zone is to be initiated, based on the positions of identifier units in respect to the operation zone. For example, the apparatus may be configured to check roles and associated permissions of only those identifier units that are currently inside the operation zone.

The apparatus may be configured to determine presence of the identifier unit inside or outside of the operation zone on the basis of information on an access point via which the identification information is received. The apparatus may be configured to detect association of the identifier unit to a given access point on the basis of receiving the identification information from or via this access point, such as a WLAN access point. It is to be noted that the apparatus performing the method of Figure 3 may alternatively receive position information associated with the identifier unit, or an indication of the presence of the identifier unit inside or outside of the operation zone from another device, such as a positioning system 31. It is to be appreciated that various other techniques may be applied. For example, the apparatus may be configured to detect the presence of the identifier inside or outside of the operation zone on the basis of location information of the mobile object to which the identifier unit is associated. The apparatus may be configured to detect the mobile object and the associated identifier approaching the operation zone on the basis of position and direction of movement of the mobile object.

The automation system may be configured by a set of presence rules applied in block 320. The presence rule(s) may define in which role(s) an identifier unit and associated mobile object is permitted to be inside (or outside) an operation zone. The presence rule(s) may be specific to roles or operation zones. For example, an operation zone specific presence rule(s) may define which roles are permitted in the associated operation zone. The presence rule(s) may define at least one role permitted for each operation mode of the operation zone. For example, the presence rules may define that a role of a manned-vehicle or a person is allowed in the manual operating state of the operation zone. In another example, one or more presence rules is defined for a particular role, such as a role for an autonomously operating vehicle. For example, the apparatus is configured to allow operation mode change only to the autonomous operation state when the role of the identifier unit is of an autonomously operating vehicle.

The apparatus may be configured to apply a presence rule based on presence of the identifier unit inside or outside the operation zone. The apparatus may be configured to apply the presence rule(s) in block 320 on the basis of the role defined in block 310. The apparatus may be configured to, on the basis of the presence rule(s), perform at least one of:
a. prevent change of the operation mode of the operation zone to an autonomous operation state in response to detecting the identifier unit in the operation zone,
b. allow change of the operation mode of the operation zone to an autonomous operation state in response to detecting the identifier unit in the operation zone, or
c. disregard presence of the identifier unit inside or outside the operation zone to allow or prevent the change of the operation mode of the operation zone.

For example, the apparatus may be configured to, in case an identifier unit, which based on its role is associated with a person, a maintenance/utility vehicle, or a mining vehicle not designed or authorized to be in the operation zone, is detected within the operation zone, prevent the change from a manual operation state of the operation zone to the autonomous operation state of the operation zone.

As an example of b), the apparatus may be configured to permit change to the autonomous operation state if an identifier unit based on its role is associated with autonomously operating mining vehicle(s) or other object authorized to operate in the zone in the autonomous operation state. However, the apparatus may be configured to prevent the mode change of the operation zone to the autonomous operation state if a mining vehicle, designed and allocated to operate in the operation zone, is detected outside the zone, or is not detected at all.

In case of c), the apparatus may be configured to disregard an identifier unit irrelevant for the operation mode change of the operation zone. An example of such an irrelevant identifier unit may be an identifier unit which based on its role is associated with a fixed object or otherwise not affecting the autonomous operation state, such as unit 8c or a unit in a rescue chamber.

In addition to facilitating reducing safety risks, the presently disclosed features enable more versatility to controlling access to operation zones enabling to improve operations efficiency. Access may be provided also for persons and/or vehicles with tags of specifically admitted roles into an operation zone reserved for operation of automated mining vehicles. In case such a person or vehicle having a tag of a specifically authorized role enters the operation zone in autonomous operation state, the operation mode of the operation zone does not need to be changed and the autonomous operation may continue.

Block 310 may comprise assigning the role of the identifier unit from a set of roles on the basis of the mobile object comprising the identifier unit or attached to the identifier unit. Thus, the role may be dynamically assigned for the identifier unit when performing the method and detecting the associated mobile object. For example, the role may be assigned in response to detecting a new mobile object in the operation zone to be isolated. The apparatus may be configured to store a role identifier according to the assigned role in a memory.

Block 310 may comprise checking a pre-defined role identifier. The role may thus have been already assigned and the role identifier stored for the identifier unit earlier. The identification information may comprise the role identifier assigned for the identifier unit. The role identifier may be associated with an identifier of an identifier unit in a safety control configuration of the mining automation system. The apparatus may be configured to define the role in block 310 based on a role identifier associated in the configuration with an identifier of an identifier unit received in block 300.

The apparatus may be configured to assign the role of the identifier unit by an association of the identifier unit to an identifier of the mobile object. For example, the identifier of the mobile object may be one of: a vehicle identifier, a safety gear identifier, or another type of mobile object identifier.

The apparatus may be configured to assign the role identifier in connection with attaching the identifier unit to the mobile object, or when initiating or instructing use of the mobile object, for example. The role identifier may be assigned in response to an operator input defining or confirming the role of the identifier unit.

The role of the identifier unit may be based on a characteristic of the mobile object, such as a category of the mobile object. Examples of general categories include vehicle and a person, for example. There may be further categories or sub-categories. For example, there may be categories for different types of vehicles, such as automated mining machine category and a person transfer and/or maintenance vehicle category.

Figure 4 illustrates an example of role assignment. The identifier unit 8 may send its identifier 400 to the positioning system 31, such as the RTLS system. This may be triggered when the identifier unit 8 is attached to a mobile object or activated at a new mobile object, for example. In another example embodiment, the identifier of the unit 8 is configured to the positioning system by an operator when activating the identifier unit at the mobile object. The positioning system 31 may update maintained identifier unit data to include the received identifier. The positioning system sends the ID of the identifier unit 8 402 to the controller 20. The positioning system 31 may also send position information of the identifier unit 8 and/or an identifier of the mobile object associated with the identifier unit 8. The controller 20 may be configured to check already stored identifier unit information, to find out if control information, such as a role identifier and an associated mobile object identifier, already exists for the received identifier. The controller may be configured to detect that the identifier unit is new or that the associated mobile obj ect has changed, and trigger assignment 404 of a role of the identifier unit. After the role is assigned, an assigned role identifier may be stored in a dataset comprising identifier unit data. The dataset may further comprise the identifier of the identifier unit 8, a mobile object identifier, and position information of the identifier unit or the mobile object, for example.

As further illustrated in this example, the controller 20 may be configured to operate as the apparatus performing the method. Figure 4 illustrates an example in which the position of the identifier unit 8 is updated 406 to the controller 20. The controller may perform a control block 408, which may comprise: detecting that the identifier unit has entered or is approaching a new operation zone, checking of the role of the identifier unit, and controlling change of operation mode of the operation zone on the basis of the role.

In another example, upon receiving a request 410 to change an operation mode of an operation zone, the controller 20 may perform block 412, which may comprise: detecting based on the position of the identifier unit that the role of the identifier unit 8 needs to be checked, checking the role of the identifier unit. and controlling change of operation mode of the operation zone on the basis of the role. Blocks 408 and 412, and potential further actions may comprise features already illustrated above.

For example, after a tag is attached to a protective gear for a person, such as a helmet, the tag is associated with protective gear and may be assigned 404 the role indicative of a person (or personal protective gear) not allowed in the operation zone during the autonomous operation state.

The apparatus may be configured to assign the role in response to and/or on the basis of received autonomous operation parameters of one or more mining vehicles at the worksite. For example, such parameters may define autonomous operations authorized on the basis of an input from the operator. For example, role identifiers may be defined in block 404 for tags of vehicle(s) allowed to drive autonomously in the operation zone, on the basis of operator input to configure the operation zone into an autonomous operation state.

The role of the identifier unit may be based on a state defined for the mobile object. The state of the mobile object may refer to a permitted operation mode defined for the mobile object, such as an autonomous driving mode. For example, if the mining vehicle is set into autonomous driving mode, the identifier unit of the mining vehicle may be automatically assigned the role of autonomously operating mining vehicle. The mining vehicle may be assigned an automation task in the automation system, for example to perform a haulage task between a loading site and an unloading site in an operation zone designed for automated operation. Thus, the identifier unit of the mining vehicle may be assigned a role of autonomously operating vehicle. Operation mode change to the autonomous operation state may thus be permitted in block 320 in the operation zone in which the identifier unit and the associated mining vehicle is located. However, operation mode change to a non-autonomous or manual operation zone may be rejected until the mining vehicle has been deactivated or its driving mode of mining vehicle has been changed to a manual driving mode.

The apparatus may be configured to maintain one or more lists of identifier units as an input to defining 310 the role or controlling 320 the operation mode change of the operation zone. The lists may be role specific. Thus, the role may be assigned to the identifier unit by adding an identifier of an identifier unit to the list. For example, the apparatus may be configured to maintain a white list of identifier units that are allowed to be inside the operation zone during the autonomous operation state. It is to be appreciated that above only some relatively simple examples were provided, and various further parameters may be applied to define the role and various further types of roles may be assigned. For example, specific roles with extended access may be tailored for tags provided to highly-trained maintenance specialists who may be carrying a specific remote control device to stop an autonomously operating vehicle.

The apparatus may be configured to perform further safety control related operations to the identifier unit in or before block 320, as a precondition for operation mode change of the operation zone. For example, the apparatus may be configured to perform a safety check of the identifier unit on the basis of the received identification information. The apparatus may be configured to prevent the change of the operation zone to an autonomous operation state in response to the identifier unit failing the safety check.

For example, the apparatus may be configured to receive information indicative of battery state of the identifier unit, such as current battery state or date of changing or loading the battery. If the battery state does not meet minimum battery state criterion, change to the autonomous operation state is prevented.

The identifier unit may be a wireless tag, which may refer to a tag which can be detected by a wireless signal. The tag may be a tag of a real-time locating system, RTLS, for example. Such tag may also be referred to as an RTLS tag. The identification information may comprise a wireless tag identifier received from a control unit of the RTLS. For example, the tag may be operative on radio frequencies, and the tag may be a radio-frequency identification, RFID, tag or a Wi-Fi tag. However, it will be appreciated that various other types of tags may be applied.

The positioning system 31, such as an RTLS system, may be configured to determine positions of the identifier units 8. The apparatus may be configured to apply position information of identifier units from the RTLS in or for block 320.

The mining automation system may comprise a collision prevention unit or function configured to determine a safety space or zone around the mobile object 3, 6 carrying the identifier unit. A size of the safety space or zone may be dimensioned in relation to safety risks of the object. Around a human may be a relatively large safety space and control policy of the collision measures may be stricter when human security is concerned. Other objects, such as mining vehicles and critical fixed structures at the mine work site may also be provided with tags or other types of identifier units, and further, imaginary safety spaces or zones may be generated around them.

As the identifier units can be assigned to different roles, it is important to keep the identifier units assigned to correct assets such as the mobile objects 3,6. This facilitates to avoid false information for automation system behaviour and decisions, such as the operation mode changes of the operation zones.

The apparatus may be configured to detect re-assignation of the identifier unit. The re-assignation may be a re-assignation to a new role and/or to a new mobile object. The re-assignation to a new role may be detected in block 310. However, the re-assignation may be performed and detected outside the method of Figure 3, and the re-assigned role may be applied in block 310 and 320. For example, an RTLS tag may be detached from a first mobile object and attached to a second mobile object, such as a helmet. Thus, the role of the tag may be reassigned and stored in the safety control configuration of the mining automation system. When the mobile object is detected inside or in proximity of an operation zone, the stored re-assigned role may be checked 310 and applied in block 320. The re-assignation of the identifier unit may be an association to a new object, such as a new vehicle, a person or a protective gear. The association to a new object may affect the role of the identifier unit, which may thus also be reassigned.

The apparatus may be configured to perform specific check(s) to detect the re-assignation or potential re-assignation of the identifier unit, such as an RTLS tag. For example, such check(s) may include one or more of (but are not limited thereto):
- detect change of a battery of the identifier unit. In case an identifier unit is detected to have the battery replaced, this may be an indication that the identifier unit may have been re-assigned. The change may be detected on the basis of battery status, for example.
- detect detachment or de-association and thus potential re-assignation of the identifier unit on the basis of a detected location of the identifier unit and the mobile object to which the identifier unit is associated.

The detachment may be detected if the locations of the mobile object and the associated identifier unit differ, for example, if they are detected under different access nodes 32. For example, based on comparing locations, an identifier of an RTLS tag configured to an automated mining machine may be detected to be detached from the automated machine. The detached identifier unit may be reassigned to a new mobile object and role. Further, the apparatus may be configured to detect association of a new identifier unit to the automated machine and assign a new role of the new identifier unit based on the automated machine.

The apparatus may be configured to, in response to detecting that an identifier unit may have been re-assigned, prompt an automation system operator to confirm whether the identifier unit is re-assigned or if it is still assigned to the same asset and into the same role. On the basis of a user input, the role may be maintained of re-assigned. The further check(s) for detecting that an identifier unit has been re-assigned facilitate to improve safety.

It is to be noted that there may be further steps and safety checks in the operation mode change procedure, as a precondition for operation mode change of the operation zone in or after block 320. For example, acknowledgements may be required from the Ack units 22, 23 of the operation zone in order to allow change of the operation mode of the operation zone. In an embodiment, the controller 20 is configured to perform a system check after receiving the acks from all PCUs configured for the operation zone being isolated. The system check may comprise a set of checking routines, such as checking operation of associated connections. The controller may be configured to change the operation mode of the operation zone in response to passing the system check.

When the operation mode of the operation zone is changed to the autonomous operation state, authorized mining vehicle(s) 3 may travel within the zone 4a. In an embodiment, the apparatus, such as the controller 20, is configured to transmit a continuous security or 'lifeline' signal to an autonomously operating mining vehicle to allow the vehicle to operate within the zone. In such embodiments, transmission of the lifeline signal may be initiated after changing the operation mode and entering the autonomous operation (and starting operation of the vehicle). The apparatus may be configured to stop sending the lifeline signal in response to detecting a new mobile object by the detection unit 21, causing the vehicle to stop. The apparatus may thus be configured to change the state of the respective zone. The apparatus may be configured to change the role . into the manual operation state in response to detecting a mobile object with an identifier unit having a role not permitting presence in an operation zone during autonomous operation state.

An electronic device comprising electronic circuitries may be an apparatus for realizing at least some embodiments, such as the method of Figure 3. The apparatus may be comprised in at least one computing device connected to or integrated into a passage control system which may be part of a worksite control or automation system.

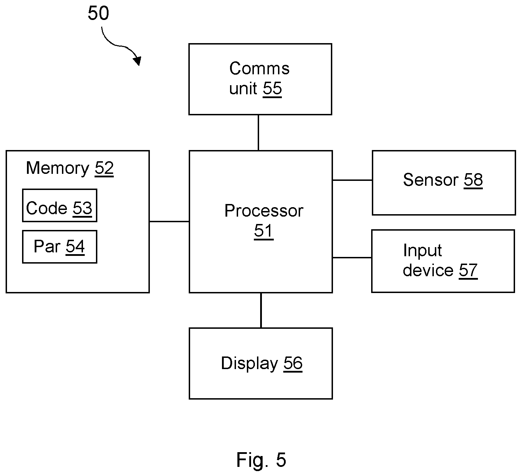

Figure 5 illustrates an example apparatus capable of supporting at least some embodiments of the present invention. Illustrated is a device 50, which may comprise or implement the controller 20 illustrated above. The device may be configured to carry out at least some of the embodiments, such the method of Figure 3, relating to controlling the operation zone mode change as illustrated above.

Comprised in the device 50 is a processor 51, which may comprise, for example, a single- or multi-core processor. The processor 51 may comprise more than one processor. The processor may be configured, at least in part by computer instructions, to perform actions.

The device 50 may comprise memory 52. The memory may comprise random-access memory and/or permanent memory. The memory may be at least in part accessible to the processor 51. The memory may be at least in part comprised in the processor 51. The memory may be at least in part external to the device 50 but accessible to the device. The memory 52 may be means for storing information, such as parameters 54 affecting operations of the device. The parameter information may comprise operation zone and mode information, operation mode change related configuration information, information unit role related information, and/or other parameters as appropriate for the automation system and controlling operation zones.

The memory 52 may comprise computer program code 53 including computer instructions that the processor 51 is configured to execute. When computer instructions configured to cause the processor to perform certain actions are stored in the memory, and the device in overall is configured to run under the direction of the processor using computer instructions from the memory, the processor and/or its at least one processing core may be considered to be configured to perform said certain actions. The processor may, together with the memory and computer program code, form means for performing at least some of the above-illustrated method steps in the device.

The device 50 may comprise a communications unit 55 comprising a transmitter and/or a receiver. The transmitter and the receiver may be configured to transmit and receive, respectively, for example, data and control commands within or outside the vehicle. The transmitter and/or receiver may be configured to operate in accordance with a long term evolution, LTE, 3GPP new radio access technology (N-RAT), wireless local area network, WLAN, a non-terrestrial communication standard, and/or Ethernet standards, for example. The device 50 may comprise a near-field communication, NFC, transceiver. The NFC transceiver may support at least one NFC technology, such as NFC, Bluetooth, or similar technologies.

The device 50 may comprise or be connected to a UI. The UI may comprise at least one of a display 56, a speaker, an input device 57 such as a keyboard, a joystick, a touchscreen, and/or a microphone. A user may operate the device via the UI, for example to initiate and/or confirm operation mode change, change display views, modify parameters 54 in response to user authentication and adequate rights associated with the user, etc.

The device 50 may further comprise and/or be connected to further units, devices and systems, such as one or more sensors 58 sensing environment of the device 50. In particular, the device 50 and the processor 51 may be connected to operational and/or physical entities illustrated above for example in connection with Figure 2.

The processor 51, the memory 52, the communications unit 55 and the UI may be interconnected by electrical leads internal to the device 50 in a multitude of different ways. For example, each of the aforementioned devices may be separately connected to a master bus internal to the device, to allow for the devices to exchange information. However, as the skilled person will appreciate, this is only one example and depending on the embodiment various ways of interconnecting at least two of the aforementioned devices may be selected without departing from the scope of the present invention.

The apparatus, such as the device 50, which may comprise or implement the controller 20, may be configured to receive identification information of an identifier unit of a mobile object, wherein the mobile object is in or approaching an operation zone of an underground mining automation system, define, on the basis of the identification information, a role of the identifier unit, and control change of an operation mode of the operation zone on the basis of the defined role.

The apparatus may be configured to prevent change of the operation zone to an autonomous operation state in which at least one mining vehicle is operating in the operation zone autonomously.

The apparatus may be configured to perform the defining by assigning the role of the identifier unit from a set of roles on the basis of the mobile object comprising the identifier unit or attached to the identifier unit. The apparatus may be configured to perform the defining by checking a pre-defined role identifier, wherein the identification information comprises the role identifier assigned for the identifier unit or the role identifier is associated with an identifier of the identifier unit in a safety control configuration of the mining automation system.

The apparatus may be configured to define the role of the identifier unit on the basis of a characteristics of the mobile object or a state defined for the mobile object. The role may define a presence rule based on presence of the identifier unit inside or outside the operation zone, and the change of the operation mode is dependent on if the identifier unit is inside the operation zone.

The apparatus may be configured to perform, on the basis of the presence rule:
- prevent change of the operation mode to an autonomous operation state in response to detecting the identifier unit in the operation zone,
- allow change of the operation mode to an autonomous operation state in response to detecting the identifier unit in the operation zone, or
- disregard presence of the identifier unit inside or outside the operation zone to allow or prevent the change of the operation mode.

The apparatus may be configured to determine presence of the identifier unit inside or outside of the operation zone on the basis of information of an access node via which the identification information is received.

The apparatus may be configured to perform a safety check of the identifier unit on the basis of the received identification information, and prevent the change of the operation zone to an autonomous operation state in response to the identifier unit failing the safety check.

The identifier unit may be a wireless tag of an RTLS, and the identification information comprises a wireless tag identifier received from a control unit of the RTLS.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention as defined in the claims.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

## Claims

1. An apparatus for controlling an operation zone of an underground mining automation system, the apparatus comprising at least one processor (51) and at least one memory (52) including computer program code, the at least one memory and the computer program code configured to, with the at least one processor, cause the apparatus at least to perform:
- receive (300) identification information of an identifier unit (8a, 8b, 8c) of a mobile object (3, 6), wherein the mobile object is in or approaching an operation zone (4a, 4b, 4c, 4d) of the underground mining automation system;
- define (310), on the basis of the identification information, a role of the identifier unit; and
- control (320) change of an operation mode of the operation zone on the basis of the defined role.

2. The apparatus of claim 1, wherein said controlling (320) comprises preventing change of the operation zone to an autonomous operation state in which at least one mining vehicle (6) is operating in the operation zone autonomously.

3. The apparatus of claim 1 or 2, wherein said defining (310) comprises assigning the role of the identifier unit from a set of roles on the basis of the mobile object comprising the identifier unit or attached to the identifier unit.

4. The apparatus of claim 1 or 2, wherein said defining (310) comprises checking a pre-defined role identifier, wherein the identification information comprises the role identifier assigned for the identifier unit or the role identifier is associated with an identifier of the identifier unit in a safety control configuration of the mining automation system.

5. The apparatus of any preceding claim, wherein the role of the identifier unit (8a, 8b, 8c) is based on a characteristic of the mobile object or a state defined for the mobile obj ect.

6. The apparatus of any preceding claim, wherein the role defines a presence rule based on presence of the identifier unit inside or outside the operation zone, and the change of the operation mode is dependent on if the identifier unit is inside the operation zone.

7. The apparatus of claim 6, wherein the at least one memory and the computer program code are configured to, with the at least one processor, cause the apparatus to perform, on the basis of the presence rule:
- prevent change of the operation mode to an autonomous operation state in response to detecting the identifier unit in the operation zone,
- allow change of the operation mode to an autonomous operation state in response to detecting the identifier unit in the operation zone, or
- disregard presence of the identifier unit inside or outside the operation zone to allow or prevent the change of the operation mode.

8. The apparatus of claim 6 or 7, wherein the at least one memory and the computer program code are configured to, with the at least one processor, cause the apparatus to determine presence of the identifier unit inside or outside of the operation zone on the basis of information of an access node via which the identification information is received.

9. The apparatus of any preceding claim, wherein the at least one memory and the computer program code are configured to, with the at least one processor, cause the apparatus to:
- perform a safety check of the identifier unit on the basis of the received identification information, and
- prevent the change of the operation zone to an autonomous operation state in response to the identifier unit failing the safety check.

10. The apparatus of any preceding claim, wherein the identifier unit is a wireless tag of a real-time locating system, RTLS, and the identification information comprises a wireless tag identifier received from a control unit of the RTLS.

11. A method for controlling operation zones of an underground mining automation system, the method comprising:
- receiving (300) identification information of an identifier unit (8a, 8b, 8c) of a mobile object (3, 6), wherein the mobile object is in or approaching an operation zone (4a, 4b, 4c, 4d) of the underground mining automation system;
- defining (310), on the basis of the identification information, a role of the identifier unit; and
- controlling (320) change of an operation mode of the operation zone on the basis of the defined role.

12. The method of claim 11, wherein said controlling (320) comprises preventing change of the operation zone to an autonomous operation state in which at least one mining vehicle (6) is operating in the operation zone autonomously.

13. The method of claim 11 or 12, wherein said defining (310) comprises:
- assigning the role of the identifier unit from a set of roles on the basis of the mobile object comprising the identifier unit or attached to the identifier unit, or
- checking a pre-defined role identifier, wherein the identification information comprises the role identifier assigned for the identifier unit or the role identifier is associated with an identifier of the identifier unit in a safety control configuration of the mining automation system.

14. A computer program comprising code for, when executed in a data processing apparatus, to cause the method in accordance with any one of the preceding claims to be performed.

15. A mining automation system, comprising the apparatus of any one of the preceding claims, at least one passage control unit (2a, 2b, 2c) to separate the operation zone (4a, 4b, 4c, 4d) from other operation zones, the identifier unit (8a, 8b, 8c), and a positioning system (31), wherein the apparatus is configured to receive (300) at least the identification information of the identifier unit from the positioning system.
